# EUROPEAN PATENT SPECIFICATION

(11) **EP 1 439 081 B1**
(45) Date of publication and mention of the grant of the patent: **07.04.2010**
(21) Application number: 04075039.0
(22) Date of filing: 07.01.2004
(51) Int. Cl.: B60G 9/00, B60G 21/05

(54) **Connection between vehicle axle and carrier arm**
Verbindung zwischen Fahrzeugachse und Tragarm
Connection entre un essieu de véhicule et un bras de support

(30) Priority: 15.01.2003 NL 1022395
(43) Date of publication of application: 21.07.2004
(73) Proprietor: Weweler Nederland B.V., 7332 AP Apeldoorn (NL)
(72) Inventor: Aalderink, Derk Geert, 7245 NV Laren (NL); Bramer, Hans, 6561 WR Eerbeek (NL)
(74) Representative: Iemenschot, Johannes Andreas

(56) References cited:
- EP-A- 0 800 937
- US-A- 2 174 320
- US-A- 2 929 617
- US-A- 3 773 347
- US-B1- 6 241 266
- PATENT ABSTRACTS OF JAPAN vol. 2002, no. 04, 4 August 2002 (2002-08-04) -& JP 2001 341509 A (MITSUBISHI STEEL MFG CO LTD), 11 December 2001 (2001-12-11)

## Description

The invention relates to a connection between an axle body of a vehicle and a carrier arm, which extends in the longitudinal direction of the vehicle and crosses the axle body substantially at right angles, according to the preamble of claim 1.

A connection of this type is known. The support part is also known as an axle pad. The intention is for the clamping means to be tightened, so that the support part and/or the section of the axle body which is accommodated therein come to bear firmly against one another.

In the case of round axle bodies, it is necessary, according to the prior art, for the axle body to be locked against undesired rotation about its centre axis, which may occur as a result of torsional forces when the vehicle is in use. The clamping force exerted by the clamping means is not sufficient to prevent undesired rotation.

It is known to lock the axle body with respect to the axle guide by means of a locking pin, which requires a hole in the axle body. Forming a hole in the axle has the drawback that the axle is excessively weakened by the hole.

An alternative is securely welding that part of the axle body which is accommodated by the support part to the support part in order to lock the axle body against undesired rotation. One drawback of welding the axle body to the support part is that the welding can cause structural changes to the axle material, with the result that the axle body is weakened in the weld areas where stress concentrations may occur and/or that a corrosion-resistant layer which has been applied to the axle body may be damaged.

From US 3,773,347 is known an axle attachment fitting with a rigid arm to which a round axle is resiliently clamped by means of mounting brackets. The resilience is provided by resilient pads that are positioned above and below the axle and that are fitted into recesses in the clamping bracket. Rigid bars are attached to the front and rear of the axle and are confined within the mounting bracket with a clearance thereto. The resilient pads allow a limited freedom of movement to the axle before the rigid members contact the mounting bracket when road irregularities or rapid deceleration of the vehicle occur.

In EP 800 937 A1 is disclosed an axle suspension wherein a hollow axle body with a square cross section is clamped to a support part which is positioned between a carrier arm and the axle body. On the upper side of the axle body is provided a ring which prevents shifting of the upper side of the square hollow axle body with respect to the support part. The ring is arranged with a small clearance in a cutout in the support part.

JP 2001341509 shows a rigid axle with a square cross section which is clamped to an axle seat arranged against a leaf spring. A rigid plate is fixed to the upper side of the axle and is accommodated with a clearance in a fitting hole in the axle seat.

It is an object of the invention to provide an improved connection between vehicle axle and carrier arm.

This object is achieved by a connection according to claim 1.

The projection which is accommodated in the depression during use ensures that the axle body is locked against rotation. The welded joint between the projection and the axle body is located in a region of the axle body where little or no stress concentration occurs, so that any structural change to the axle material as a result of welding has no adverse effect. The axle body with projection and the support part, prior to assembly of the connection, can be provided with a corrosion-resistant layer which can then remain undamaged during assembly.

Advantageous embodiments of the connection according to the invention are defined in claims 2 to 9.

The invention will be explained below with reference to the drawing, in which:
Fig. 1 shows a side view, partially in section and in exploded form, of an embodiment of a connection according to the invention,
Fig. 2 shows a rear side of the embodiment shown in Fig. 1, as seen in the direction indicated by arrow II,
Fig. 3 shows part of the axle body with projection from the connection shown in Fig. 1 on an enlarged scale,
Fig. 4 shows a cross section on line IV-IV in Fig. 3,
Fig. 5 shows a cross section corresponding to Fig. 4, with the projection having a slightly different cross section that is not according to the invention,
Fig. 6 shows part of an axle body with projection and a support part to be fitted to it,
Fig. 7 shows a cross section corresponding to Fig. 4, in which the axle body is provided with two projections,
Fig. 8 shows another embodiment of the connection according to the invention, and
Fig. 9 shows an embodiment of a support part with further depressions which is to be used in the connection according to the invention.

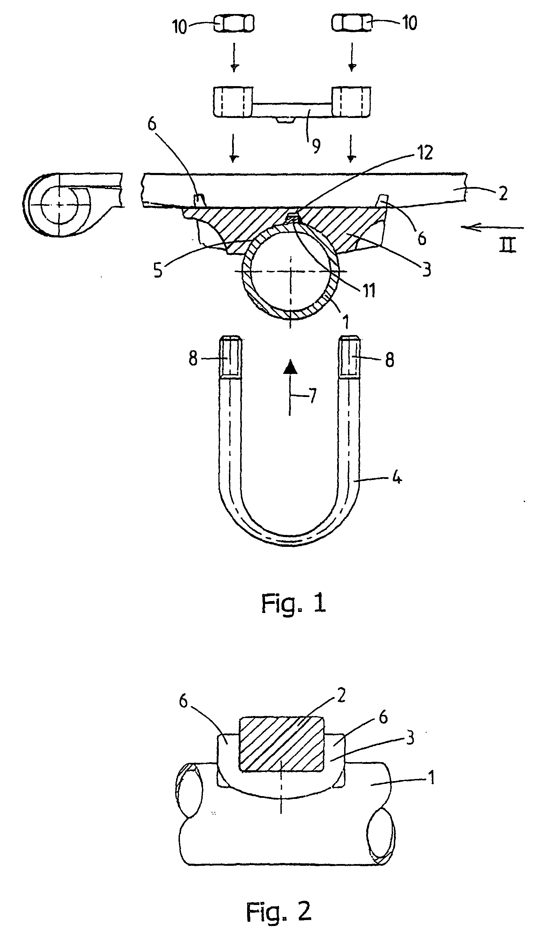

Fig. 1 and 2 show a connection between an axle body 1 of a vehicle and a carrier arm 2 which extends in the longitudinal direction of the vehicle and crosses the axle body 1 substantially at right angles. The axle body 1 is substantially round in cross section and is preferably designed as a substantially round tube. The carrier arm 2 is substantially straight at the location where the carrier arm 2 crosses the axle body 1.

The connection comprises a support part 3 and clamping means in the form of U-shaped brackets 4. The support part 3 is positioned on the underside of the carrier arm 2 and has a recess 5 on the side remote from the carrier arm 2, in which part of the axle body 1 can be received. The support part 3 is provided with projections 6 which extend along either side of the carrier arm 2. These projections 6 ensure that the support part 3 and the carrier arm 2 cannot move with respect to one another in the transverse direction of the carrier arm 2.

The brackets 4 are positioned around the axle body 1, in the direction indicated by arrow 7. The limbs of the brackets 4 extend next to the carrier arm 2 and through holes formed in a clamping part 9 arranged above the carrier arm 2. At their ends, the brackets 4 are provided with threaded sections 8 which can interact with nuts 10 which can be used to tighten the connection.

When the connection has been tightened, the axle body is accommodated in a positively locking manner in the recess 5.

At the location of the support part 3, the axle body 1 is provided with a projection 11 which is welded to the axle body and is at least partially accommodated in a depression 12 which is arranged in the recess 5 of the support part 3 and is substantially complementary with respect to the projection 11.

This ensures that during use the axle body 1 is locked against rotation.

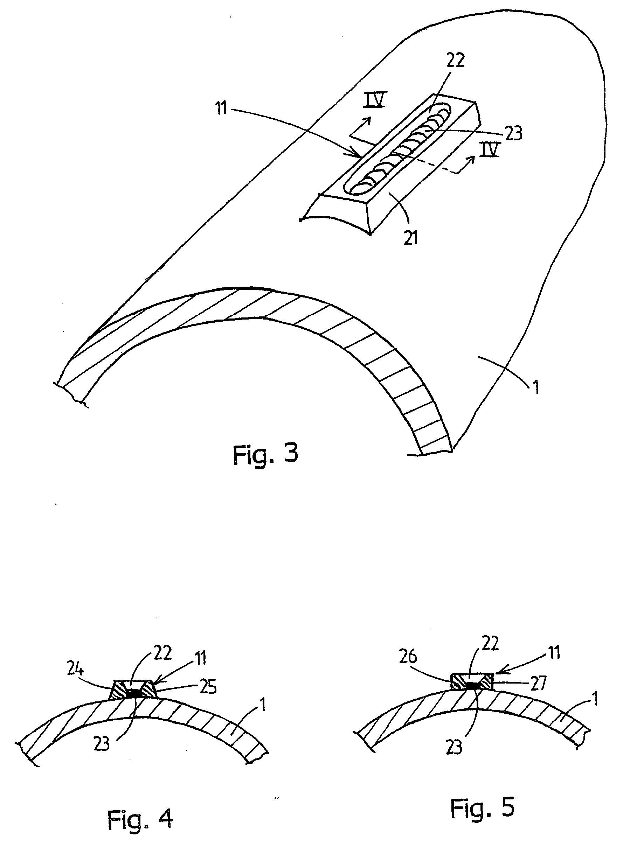

The projection 11 is preferably in the form of an elongate key body 21 which extends parallel to the centre axis of the axle body 1, as indicated in Fig. 3. The key-like body 21 is provided with an elongate, continuous hole 22. A welded joint 23, by means of which the key body 21 is welded to the axle body 1, is formed in the hole 22. However, as an alternative to an elongate hole 22, it is also possible for a plurality of adjacent, continuous holes to be formed in the key body 21 (not shown).

It is also possible for the projection to be in the form of a plurality of key bodies arranged next to one another, in the direction of the centre axis of the axle body 1, on the axle body 1 (not shown). Key bodies of this type may, for example, be of round or square design.

It is also possible for the projection to be in the form of a single key body which, for example, may be of round or square design.

Any change to the structure of the axle material at the location of the welded joint 23 has no adverse effect, since the welded joint 23 is arranged in an area of the axle body 1 where little or no stress concentration occurs.

The application of a projection 11 to the axle body 1 by means of welding has the advantage that after the projection 11 has been applied and prior to assembly of the connection, the axle body 1 with the projection 11 can be provided with a corrosion-resistant layer. It is also possible for the support part to be provided with a corrosion-resistant layer prior to assembly of the connection. This layer can remain undamaged during assembly of the connection.

As seen in cross section perpendicular to the direction of the centre axis of the axle body, the projection 11 is preferably in the shape of a trapezium, as shown in Fig. 3 and 4. The depression 12 in the support part 3 is in this case in the shape of a trapezium matched to the shape of the projection 11. Slight deformation of the support part during assembly of the connection (tightening of the nuts 10) produces a tight clamping between the side faces 24 and 25 of the projection 11 and those side faces of the recess 12 which are in contact therewith.

In a cross section not according to the invention, the projection may also be in the shape of a rectangle, in which case the side faces 26 and 27 of the projection 11 are substantially parallel to one another. However, a drawback of this embodiment is that the tolerances of the dimensions of the projection 11 and the depression 12 in the support part 3 have to be virtually completely accurate in the circumferential direction of the axle body.

Fig. 4 and 5 likewise show the continuous hole 22 in the key body 21 and the welded joint 23. The key body shown in figure 5 is not shaped according to the invention.

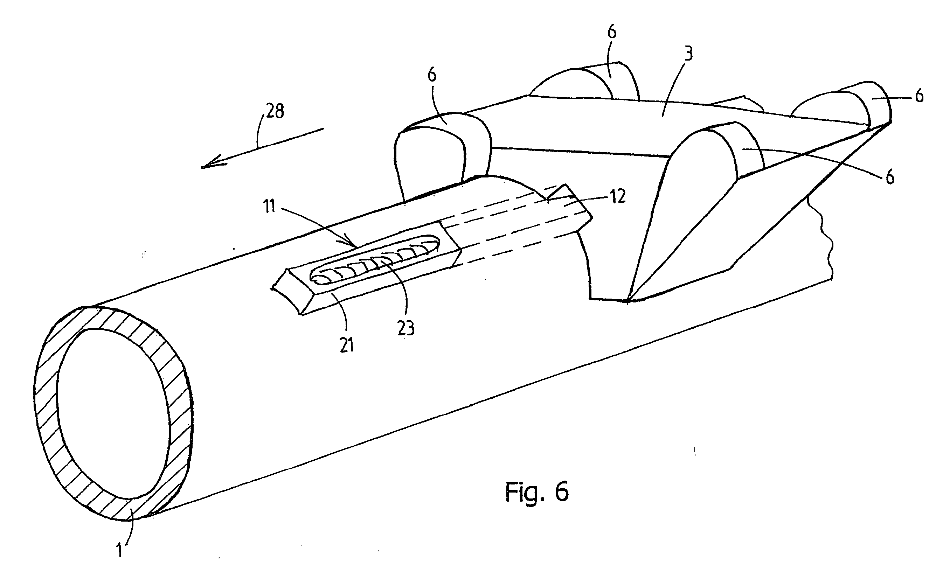

The depression 12 in the support part 3 is preferably in the form of a slot which is open at the sides of the support part 3, as illustrated in Fig. 6. This has the advantage that the support part 3 can be pushed onto the axle body 1 in the longitudinal direction of the axle body 1 (in the direction indicated by arrow 28). This also offers the possibility of simple adjustment of the distance between the carrier arms 2 during mounting of an assembly of an axle body 1 and carrier arms 2 on a vehicle.

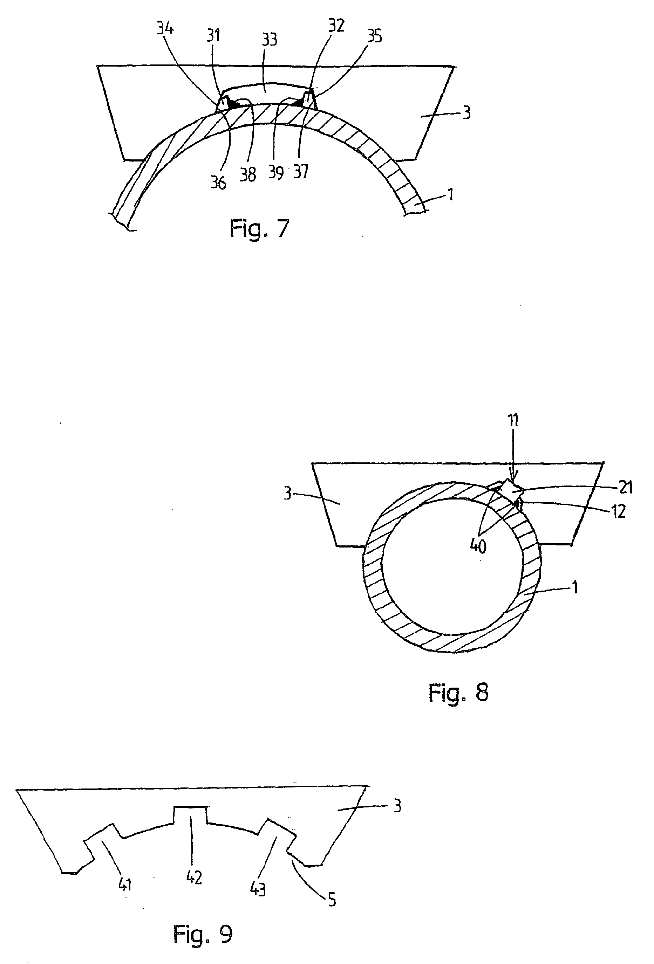

It is also possible for two projections 31 and 32 to be fitted to the axle body 1, spaced apart from one another in the circumferential direction of the axle body 1, as shown in Fig. 7. The depression 33 in the support part 3 is in this case shaped in such a manner that the side faces 34 and 35 of the depression 33 interact with the side face 36 of the projection 31 and the side face 37, remote from the side face 36, of the projection 32. The projections 31 and 32 are welded to the axle body 1 by means of welded joints 38 and 39 applied to the opposite sides of the projections 31 and 32 from the side faces 36 and 37, respectively. The side faces 36 and 37 are inclined, so that the projections 31 and 32 together, as it were, form a projection with a cross section in the shape of a trapezium.

The projections 11 on the axle body 1 and the depression 12 in the support part 3 do not necessarily have to lie in the central region of the support part 3. In certain cases, it may be advantageous for the projection 11 and the recess 12 to be arranged at a distance from the central region of the support part 3, as shown in Fig. 8. In the embodiment shown in Fig. 8, the projection 11 is welded to the axle body 1 by means of a welded joint 40 formed at the longitudinal sides of the key body 21. The shape of the depression 12 is in this case modified.

In the embodiment shown in Fig. 9, the support part 3 is provided with a plurality of depressions 41, 42, 43 which are arranged at a distance from one another in the peripheral direction of the recess 5. This offers the option of positioning the axle body 1 in various angular positions with respect to the support part and therefore with respect to the carrier arm 2. This may be necessary with a view to the position of a brake device arranged on the axle body 1.

The above text has described a connection in which the carrier arm is located above the axle body. However, it is equally possible for the connection according to the invention to be used if the carrier arm is arranged beneath the axle body.

In another embodiment (not shown) of the connection, the projection may be formed by weld material which has been applied to the axle body, such as a weld bead which is subsequently machined.

The connection according to the invention has the following advantages:
- the axle body 1 itself does not have to be machined and therefore remains round in shape;
- the axle body with projection can be provided, after the projection has been fitted, with a corrosion-resistant layer which obviously does not have to be subsequently damaged during assembly of the connection;
- the position of the carrier arm in the longitudinal direction of the axle body can be accurately set;
- the principle of the connection can be applied to axles of different diameters and wall thicknesses;
- the projection on the axle body and the depression in the support part do not necessarily have to lie in the central region of the connection;
- the welded joint between the key body and the axle body can be arranged in a suitable zone of the axle body (cf. Fig. 8);
- use of a support part with a plurality of depressions allows the axle body to be positioned at various angles with respect to the support part.

## Claims

1. Connection between an axle body (1) of a vehicle and a carrier arm (2) which extends in the longitudinal direction of the vehicle and crosses the axle body (1) substantially at right angles, which axle body (1) is substantially round in cross section, comprising a support part (3), which is positioned between the axle body (1) and the carrier arm and has a recess (5) in which part of the axle body (1) is accommodated, and also comprising clamping means (4), by means of which the support part (3) and that part of the axle body (1) which it accommodates are fixed to the carrier arm (2), the axle body (1), in the assembled state, being pressed into the recess (5) as a result of a clamping force supplied by the clamping means (4), and bearing against the inner wall of the recess (5), **characterized in that** the axle body (1), at the location of the support part, is provided with at least one projection (11, 31, 32) which is welded to the axle body (1), **in that** the support part, in the recess, is provided with at least one depression (12, 33) which is substantially complementary with respect to the projection (11, 31, 32), the projection (11, 31, 32), in the assembled state, being at least partially accommodated inside the depression (12, 33), and **in that** the projection (11) or projections (31, 32) together, as seen in cross section perpendicular to the direction of the centre axis of the axle body (1), is substantially in the shape of a trapezium with the side faces (24, 25, 34, 35) inclined.

2. Connection according to claim 1, in which the projection (11) is in the form of an elongate key body (21) which extends parallel to the centre axis of the axle body (1).

3. Connection according to claim 1, in which the projection (11) is in the form of a plurality of key bodies arranged next to one another in the direction of the centre axis of the axle body (1).

4. Connection according to claim 2 or 3, in which the projection (11) is welded to the axle body (1) by means of a welded joint formed in at least one continuous hole (22) arranged in the or each key body (21).

5. Connection according to claim 2 or 3, in which the projection (11) is welded to the axle body (1) by means of a welded joint arranged on the longitudinal side of the or each key body (21).

6. Connection according to one of claims 1-5, in which the depression (12) is in the form of a slot which is open at the sides of the support part (3).

7. Connection according to one of claims 1-6, in which the support part (3) is provided with a plurality of depressions (41, 42, 43) which are arranged at a distance from one another in the peripheral direction of the recess (5).

8. Connection according to claim 1, in which the projection is formed by weld material which has been applied to the axle body (1).

9. Connection according to one of the preceding claims, wherein a corrosion-resistant layer is applied to the axle body (1) with the projection (11, 31, 32) provided on it.

## Patentansprüche

1. Verbindung zwischen einem Achskörper (1) eines Fahrzeugs und einem Tragarm (2), der sich in der Längsrichtung des Fahrzeugs erstreckt und den Achskörper (1) im wesentlichen in einem rechten Winkel kreuzt, wobei der Achskörper (1) im wesentlichen einen runden Querschnitt hat, umfassend ein Halteteil (3), das zwischen dem Achskörper (1) und dem Tragarm angebracht ist und eine Ausnehmung (5) aufweist, in der ein Teil des Achskörpers (1) aufgenommen ist, und zudem umfassend eine Klemmeinrichtung (4), mit deren Hilfe das Halteteil (3) und jener Teil des Achskörpers (1), den es aufnimmt, an dem Tragarm (2) befestigt sind, wobei der Achskörper (1) im zusammengesetzten Zustand in die Ausnehmung (5) infolge der Klemmkraft gepresst ist, die von der Klemmeinrichtung (4) ausgeübt wird, und auf der Innenwand der Ausnehmung (5) ruht, **dadurch gekennzeichnet, dass** der Achskörper (1) an der Stelle des Halteteils mit wenigstens einem Vorsprung (11, 31, 32) versehen ist, der an den Achskörper (1) geschweißt ist, **dadurch**, dass das Halteteil in der Ausnehmung mit wenigstens einer Vertiefung (12, 33) versehen ist, die im wesentlichen komplementär im Bezug auf den Vorsprung (11, 31, 32) ist, wobei der Vorsprung (11, 31, 32) im zusammengesetzten Zustand wenigstens teilweise in der Vertiefung (12, 33) aufgenommen ist, und **dadurch**, dass der Vorsprung (11) oder die Vorsprünge (31, 32) zusammen, im Querschnitt senkrecht zur Richtung der Mittelachse des Achskörpers (1) gesehen, im wesentlichen die Form eines Trapezes mit geneigten Seitenflächen (24, 25, 34, 35) haben.

2. Verbindung nach Anspruch 1, bei der der Vorsprung (11) die Form eines länglichen Keilkörpers (21) hat, der sich parallel zur Mittelachse des Achskörpers (1) erstreckt.

3. Verbindung nach Anspruch 1, bei der der Vorsprung (11) die Form einer Vielzahl von Keilkörpern hat, die nebeneinander in Richtung der Mittelachse des Achskörpers (1) angeordnet sind.

4. Verbindung nach Anspruch 2 oder 3, bei der der Vorsprung (11) an den Achskörper (1) mit Hilfe einer Schweißverbindung geschweißt ist, die in wenigstens einem Langloch (22) ausgebildet ist, das in dem oder in jedem Keilkörper (21) ausgebildet ist.

5. Verbindung nach Anspruch 2 oder 3, bei der der Vorsprung (11) an den Achskörper (1) mit Hilfe einer Schweißverbindung geschweißt ist, die auf der Längsseite des oder jedes Keilkörpers (21) ausgebildet ist.

6. Verbindung nach einem der Ansprüche 1 bis 5, bei der die Vertiefung (12) die Gestalt eines Schlitzes hat, der an den Seiten des Halteteils (3) geöffnet ist.

7. Verbindung nach einem der Ansprüche 1 bis 6, bei der das Halteteil (3) mit einer Vielzahl von Vertiefungen (41, 42, 43) ausgestattet ist, die in einem Abstand zueinander in Umfangsrichtung der Ausnehmung (5) angeordnet sind.

8. Verbindung nach Anspruch 1, bei der der Vorsprung durch ein Schweißmaterial ausgebildet ist, das auf den Achskörper (1) aufgebracht wurde.

9. Verbindung nach einem der vorhergehenden Ansprüche, bei der eine Korrosionsschutzschicht auf den Achskörper (1) aufgebracht ist, wobei der Vorsprung (11, 31, 32) auf dieser Vorgesehen ist.

## Revendications

1. Connexion entre un corps (1) d'essieu dans un véhicule et un bras (2) de support qui s'étend dans la direction longitudinale du véhicule et croise le corps (1) de l'essieu sensiblement à angles droits, le corps (1) de l'essieu étant de section transversale sensiblement circulaire, comprenant une partie (3) de support, qui est placée entre le corps (1) d'essieu et le bras de support et qui a une cavité (5) dans laquelle une partie du corps (1) de l'essieu est logée, et comprenant aussi des moyens (4) de serrage à l'aide desquels la partie (3) de support et la partie du corps (1) de l'essieu qui la loge sont fixées au bras (2) de support, le corps (1) de l'essieu étant, à l'état assemblé, pressé dans la cavité (5) en résultat d'une force de serrage fournie par les moyens (4) de serrage, et portant sur la paroi intérieure de la cavité (5) **caractérisé en ce que** le corps (1) de l'essieu est, à l'emplacement de la partie de support, pourvu d'au moins une saillie (11, 31, 32) qui est soudée au corps (1) de l'essieu, **en ce que** la partie de support est dans la cavité, pourvue d'au moins une dépression (12, 33) qui est sensiblement complémentaire de la saillie (11, 31, 32), la saillie (11, 31, 32) étant, à l'état assemblé, logée au moins en partie à l'intérieur de la dépression (12, 33) et **en ce que** la saillie (11) ou les saillies (31, 32) ensemble, tel que vue en section transversale perpendiculairement à la direction de l'axe central du corps (1) de l'essieu, a sensiblement la forme d'un trapèze dont les faces (24, 25, 34, 35) latérales sont inclinées.

2. Connexion suivant la revendication 1, dans laquelle la saillie (11) est sous la forme d'un corps (21) oblong de cale, qui s'étend parallèlement à l'axe central du corps (1) de l'essieu.

3. Connexion suivant la revendication 1, dans laquelle la saillie (11) est sous la forme d'une pluralité de corps de cale disposés les uns à côté des autres dans la direction de l'axe central du corps (1) de l'essieu.

4. Connexion suivant la revendication 2 ou 3, dans laquelle la saillie (11) est soudée au corps (1) de l'essieu au moyen d'un joint soudé formé dans au moins un trou (22) continu dans le corps (21) de cale ou dans chaque corps (21) de cale.

5. Connexion suivant la revendication 2 ou 3, dans laquelle la saille (11) est soudée au corps (1) de l'essieu au moyen d'un joint soudé disposé sur le côté longitudinal du corps (21) de cale ou de chaque corps (21) de cale.

6. Connexion suivant l'une des revendications 1 à 5, dans laquelle la dépression (12) est sous la forme d'une fente qui est ouverte sur les côtés de la partie (3) de support.

7. Connexion suivant l'une des revendications 1 à 6, dans laquelle la partie (3) de support est pourvue d'une pluralité de dépressions (41, 42, 43) qui sont disposées à distance les unes des autres dans la direction périphérique de la cavité (5).

8. Connexion suivant la revendication 1, dans laquelle la saillie est formée par de la matière de soudure, qui a été appliquée au corps (1) de l'essieu.

9. Connexion suivant l'une des revendications précédentes, dans laquelle une couche de résistance à la corrosion est appliquée au corps (1) de l'essieu alors que la saillie (30, 31, 32) y est prévue.
